# EUROPEAN PATENT SPECIFICATION

(11) **EP 3 678 290 B1**
(45) Date of publication and mention of the grant of the patent: **21.09.2022**
(21) Application number: 18851116.6
(22) Date of filing: 24.07.2018
(51) Int. Cl.: H02P 29/40

(54) **MOTOR DRIVING DEVICE**
MOTORANSTEUERUNGSVORRICHTUNG
DISPOSITIF D'ENTRAÎNEMENT DE MOTEUR

(30) Priority: 29.08.2017 JP 2017164503
(43) Date of publication of application: 08.07.2020
(73) Proprietor: Panasonic Intellectual Property Management Co., Ltd., Osaka-shi, Osaka 540-6207 (JP)
(72) Inventor: IMADA, Yusuke, Osaka-shi, Osaka 540-6207 (JP); SUZUKI, Ken'ichi, Osaka-shi, Osaka 540-6207 (JP)
(74) Representative: SSM Sandmair
(86) International application number: PCT/JP2018/027582
(87) International publication number: WO 2019/044271

(56) References cited:
- JP-A- H04 364 387
- JP-A- 2003 058 213
- JP-A- 2004 328 829
- JP-A- 2005 071 034
- JP-A- 2008 210 273
- JP-A- 2014 174 854
- JP-A- 2016 101 017
- US-A1- 2004 138 797
- US-A1- 2007 027 590

## Description

### TECHNICAL FIELD

The present disclosure relates to a motor driving device included in an industrial device or the like.

### BACKGROUND ART

Controlling a servomotor included in an industrial device or the like typically includes position control in which a position controller generates a speed command such that a position command supplied from a host controller to a motor driving device matches a motor position. A speed controller subsequently generates a torque command such that the speed command matches motor speed. A current controller controls motor current such that the torque command matches motor output torque. The motor driving device is, however, typically configured not to grasp the motor output torque. The current controller thus controls the motor current to achieve a flow of motor current necessary for the motor output torque according to the torque command. The host controller directly supplies the motor driving device with the speed command during speed control, whereas the host controller directly supplies the motor driving device with the torque command during torque control.

In such control of the servomotor, motor output torque is not output in accordance with the torque command during inversion in motor operation direction. This is caused by friction torque having hysteresis characteristics in a motor itself and a drive mechanism for the industrial device. Such an error of the motor output torque relative to the torque command causes deterioration in locus accuracy like an outward shift of an actual operation locus relative to a command locus for biaxial circular interpolation operation in a processing machine including the servomotor. The error thus deteriorates processing accuracy of the processing machine.

In order to remove influence of such friction, there has been proposed a method of generating displacement between the motor position and a current motor position different in code of motor speed, and applying a model indicating relation between the displacement and the friction torque. This method includes generating friction compensating torque from an absolute value of the displacement and the motor speed in accordance with the model, and adding the friction compensating torque to a torque command value output from the speed controller, to compensate influence of the friction torque having the hysteresis characteristics upon inversion in motor operation direction (see JP 2008 210273 A, for example).

However, the conventional method does not have change in motor position if the torque command supplied from the host controller is less than the friction torque during torque control in a winding machine or the like. The conventional method thus leads to the displacement and the motor speed each equal to zero as well as the friction compensating torque equal to zero, failing to achieve the motor output torque according to the torque command.

JP 2005 071034 A describes a servo controller which performs high speed and highly accurate control with little response delay by reducing mechanical vibration due to non-linear disturbance. A first feed-forward compensation part attenuates vibration factor components included in a position command to generate a first position command, and differentiates the first position command to generate a first speed feed-forward command and a first torque feed-forward command. A second feed-forward compensation part is provided with a timing compensation part with delay quantity which is almost equivalent to the delay quantity of the filtering of a vibration reducing filter to input the position command, and to adjust the timing of the non-linear correction of the toque command non-linear correction part, a differentiator to differentiate the output of the timing correction part and a torque command non-linear correction part to apply non-linear functions to the output of the differentiator to generate a second toque feed-forward command. A feedback compensation part performs feedbackcontrol of the position of a control target based on those commands and the measurement result of an encoder.

### SUMMARY OF THE INVENTION

The invention is defined by the subject-matter of independent claim 1. The dependent claims are directed to advantageous embodiments.

### ADVANTAGES OF THE INVENTION

Advantageously, there is
provided a motor driving device configured to compensate influence of friction torque during motor stop and obtain motor output torque according to a torque command.

Advantageously, a motor driving device is configured to control motor current flowing to a motor in accordance with a torque command, and includes a friction compensator configured to generate a friction compensating torque command for compensation of static friction torque of the motor, in accordance with the torque command and motor speed of the motor. The friction compensator generates the friction compensating torque command in accordance with code of variation for a torque command immediately before the torque command. The motor driving device controls the motor current in accordance with a compensated torque command generated by adding or subtracting the friction compensating torque command to or from the torque command.

The motor driving device switches the code of the friction compensating torque in accordance with the code of the variation of the torque command, to correctly compensate the influence of the friction torque having hysteresis characteristics even while the motor stops and obtain the motor output torque according to the torque command.

### BRIEF DESCRIPTION OF DRAWINGS

FIG. 1 is a block diagram depicting a functional configuration of a motor driving device according to an exemplary embodiment.
FIG. 2 is a block diagram depicting a functional configuration of a friction compensator according to the invention.
FIG. 3 is a graph indicating relation between a torque command and motor speed in a case where a motor is driven with use of the motor driving device according to an exemplary embodiment.
FIG. 4 is a graph indicating relation between the torque command and motor output torque in a case where the motor is restrained in terms of operation with use of the motor driving device according to the exemplary embodiment.

### DESCRIPTION OF THE INVENTION AND THE EMBODIMENTS

The present disclosure provides a motor driving device, which is configured to control motor current by means of a current controller such that a torque command matches motor output torque, switches code of friction compensating torque in accordance with code of variation of the torque command to correctly compensate influence of friction torque having hysteresis characteristics even during motor stop and obtain the motor output torque according to the torque command.

The drawings provide schematic depiction and do not necessarily have exact views. Substantially identical elements depicted in the drawings will be denoted by identical reference marks and will not be described repeatedly or will be described briefly.

The motor driving device according to the invention, and embodiments will be described with reference to the drawings.

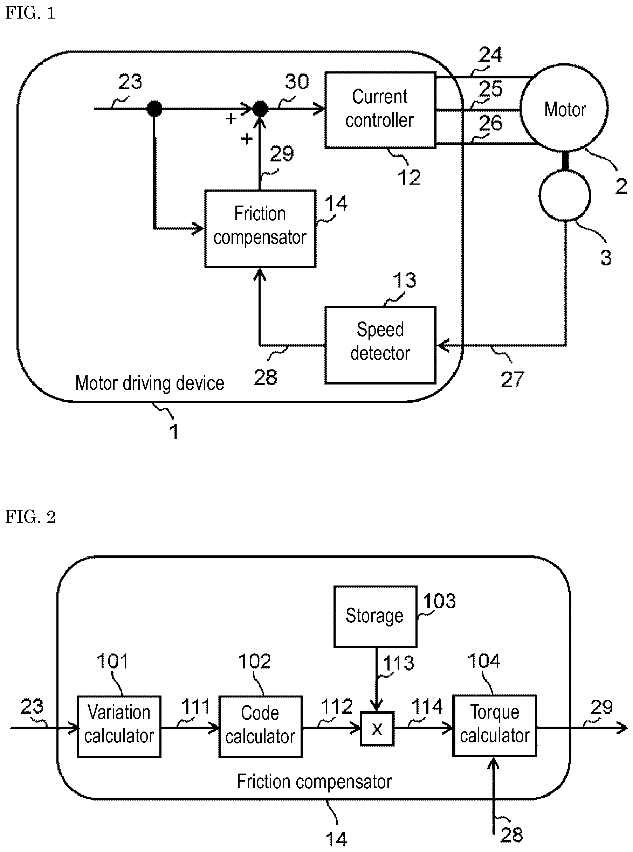

FIG. 1 is a block diagram depicting a functional configuration of motor driving device 1 according to the the invention.

FIG. 1 depicts motor driving device 1, as well as motor 2 controlled by motor driving device 1, and encoder 3.

Motor driving device 1 controls motor current flowing to motor 2 in accordance with torque command 23. Motor driving device 1 functionally includes current controller 12, speed detector 13, and friction compensator 14, as depicted in FIG. 1. Motor driving device 1 controls the motor current including U-phase current 24, V-phase current 25, and W-phase current 26, so as to drive motor 2. Motor driving device 1 according to the invention controls the motor current in accordance with compensated torque command 30 generated by adding friction compensating torque command 29 to torque command 23. Friction compensating torque command 29 is generated with reference to torque command 23 by friction compensator 14.

Motor 2 is a servomotor controlled by motor driving device 1.

Encoder 3 is a detector configured to detect motor position 27 of motor 2 and transmits feedback to motor driving device 1.

Speed detector 13 is configured to detect motor speed of motor 2. Speed detector 13 calculates a variation rate of motor position 27 received from encoder 3 to detect motor speed 28. Speed detector 13 transmits motor speed 28 thus detected to friction compensator 14.

Friction compensator 14 is a processor configured to generate friction compensating torque command 29 for compensation of static friction torque of motor 2, in accordance with torque command 23 and motor speed 28 of motor 2. Friction compensator 14 generates friction compensating torque command 29 in accordance with code of variation for a torque command immediately before torque command 23. This enables torque compensation differentiated between a case where the torque command increases and a case where the torque command decreases. In other words, this achieves torque compensation according to hysteresis characteristics of the static friction torque. Friction compensator 14 will be described in detail later.

Current controller 12 controls motor current flowing to motor 2 in accordance with compensated torque command 30. Compensated torque command 30 is generated by adding friction compensating torque command 29 to torque command 23.

Motor driving device 1 will now be described in terms of operation. Torque command 23 is initially generated as a result of position control and speed control (not depicted) or through an external interface (I/F). Meanwhile, motor position 27 detected by encoder 3 is transmitted to speed detector 13. Speed detector 13 calculates motor speed 28 in accordance with motor position 27. Speed detector 13 calculates motor speed 28 through dividing a difference of motor position 27 in each calculation cycle by the calculation cycle, for example.

Friction compensator 14 receives torque command 23 and motor speed 28 and calculates friction compensating torque command 29. How to calculate friction compensating torque command 29 will be described later.

Motor driving device 1 calculates compensated torque command 30 through adding friction compensating torque command 29 to torque command 23. Compensated torque command 30 thus calculated is transmitted to current controller 12. Current controller 12 controls U-phase current 24, V-phase current 25, and W-phase current 26 in accordance with compensated torque command 30 such that motor 2 outputs torque according to torque command 23.

Motor driving device 1 thus configured will be described below in detail with reference to the drawings in terms of operation and effect as to friction torque compensation during motor stop.

FIG. 2 is a block diagram depicting a functional configuration of friction compensator 14 according to the invention.

As depicted in FIG. 2, friction compensator 14 includes variation calculator 101, code calculator 102, storage 103, and torque calculator 104.

Variation calculator 101 is a processor configured to calculate variation of torque command 23 in accordance with received torque command 23. Variation calculator 101 calculates variation 111 for the torque command immediately before torque command 23 and transmits variation 111 thus calculated to code calculator 102. Variation calculator 101 calculates variation 111 through obtaining a difference of torque command 23 in each calculation cycle, for example.

Code calculator 102 is a processor configured to calculate variation code 112 in accordance with variation 111 received from variation calculator 101. Code calculator 102 sets variation code 112 to 1 when variation 111 has a positive value, and sets variation code 112 to -1 when variation 111 has a negative value. When variation 111 is zero, code calculator 102 sets variation code 112 identically to variation code for variation received immediately before variation 111. The case where variation 111 is zero includes a case where variation 111 is completely equal to zero as well as a case where variation 111 is substantially zero. For example, the case where variation 111 is zero includes a case where variation 111 is less than a sufficiently small predetermined value.

Storage 103 is a memory storing a value of static friction torque 113. Static friction torque 113 stored in storage 103 may have a value of compensated torque command 30 upon motor operation start when compensated torque command 30 is increased gradually.

Torque calculator 104 is a processor configured to calculate friction compensating torque command 29 in accordance with static friction torque compensation value 114 obtained by multiplying variation code 112 and static friction torque 113, as well as motor speed 28. Torque calculator 104 sets friction compensating torque command 29 to static friction torque compensation value 114 when motor speed 28 is zero, and sets friction compensating torque command 29 to zero when motor speed 28 is not zero. This enables compensation of the friction torque only in a case where the friction torque needs to be compensated, in other words, while motor 2 stops.

The case where motor speed 28 is zero includes a case where motor speed 28 is completely equal to zero as well as a case where motor speed 28 is substantially zero. For example, the case where motor speed 28 is zero includes a case where motor speed 28 is less than a sufficiently small predetermined value.

As described above, friction compensator 14 according to the present invention switches code of friction compensating torque command 29 in accordance with the code of variation 111 of torque command 23. Provision of friction compensator 14 in motor driving device 1 enables appropriate compensation of the friction torque as to be described later through simple calculation of only switching code.

Friction compensating torque command 29 generated by friction compensator 14 has a positive value when variation 111 of torque command 23 has a positive value and has a negative value when variation 111 of torque command 23 has a negative value. Friction compensating torque command 29 generated by friction compensator 14 is generated in accordance with the torque command immediately before torque command 23 when variation 111 of torque command 23 is zero. When friction compensating torque command 29 is generated in this manner, the friction torque can be compensated appropriately through controlling the motor current in accordance with compensated torque command 30 generated by adding friction compensating torque command 29 to torque command 23.

Motor driving device 1 will be described with reference to the drawings in terms of check result of friction torque compensation effect during motor stop.

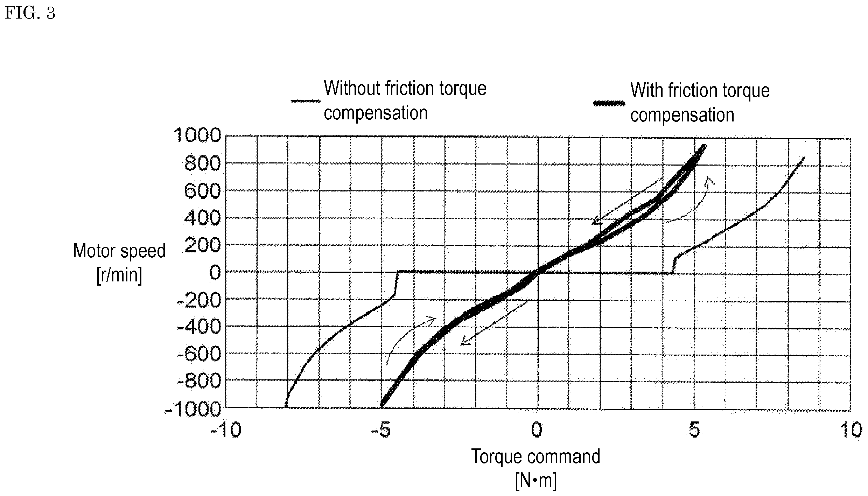

FIG. 3 is a graph indicating relation between torque command 23 and motor speed 28 in a case where motor 2 is driven with use of motor driving device 1 according to an exemplary embodiment. FIG. 3 indicates the relation between torque command 23 and motor speed 28 under a condition where only motor 2 operates without external restraint. The graph in FIG. 3 includes a thin solid line indicating a measurement result of motor speed 28 in a case where, without friction compensation, torque command 23 of motor driving device 1 is varied in a positive direction from zero (in a stopped state) and is varied in a negative direction from zero (in the stopped state) (i.e. when motor 2 operates in accordance with torque command 23). The graph in FIG. 3 also includes a thick solid line indicating a measurement result of motor speed 28 in a case where, with friction compensation, torque command 23 of motor driving device 1 is varied in the positive direction from zero, is then varied in the negative direction, and is further varied to reach zero.

As indicated in FIG. 3, without the friction torque compensation, motor speed 28 is zero until torque command 23 becomes more than or equal to the static friction torque. In contrast, with the friction torque compensation, the static friction torque is compensated appropriately to achieve linearity of the motor speed at a torque command approximate to zero (i.e. linearity of the motor speed relative to the torque command). The motor speed is substantially equal during increase and decrease in torque command, achieving appropriate compensation of the hysteresis characteristics of the friction torque.

Described next with reference to a drawing is relation between torque command 23 and the motor output torque of motor driving device 1 according to the present exemplary embodiment.

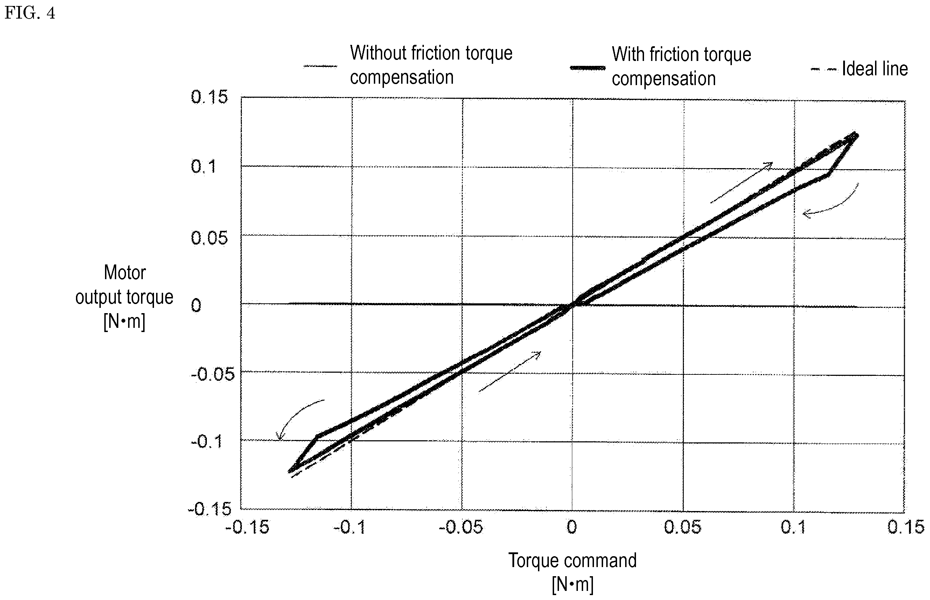

FIG. 4 is a graph indicating relation between torque command 23 and the motor output torque in a case where operation of motor 2 is restrained with use of motor driving device 1 according to the present exemplary embodiment. FIG. 4 indicates the relation between torque command 23 and the motor output torque in a case where motor 2 is externally locked so as not to operate. The graph in FIG. 4 includes a thin solid line and a thick solid line indicating relation in the case without the friction compensation and relation in the case with the friction compensation, respectively. The lines in FIG. 4 indicate measurement results of the motor output torque in the case where torque command 23 is varied in the positive direction from zero, is then varied in the negative direction, and is further varied to reach zero. Torque command 23 is varied within a range not exceeding the static friction torque for the measurement. FIG. 4 includes a broken line indicating a straight line (ideal straight line) for an ideal state where torque command 23 is equal to the motor output torque.

As indicated in FIG. 4, without the friction torque compensation, torque command 23 is less than or equal to the static friction torque and the motor output torque is thus zero independently from torque command 23. In contrast, with the friction torque compensation, the static friction torque is compensated appropriately to achieve a result close to the ideal straight line (the broken line in FIG. 4) for the motor output torque equal to torque command 23. This indicates achievement of linearity of the motor output torque (i.e. linearity of the motor output torque relative to torque command 23). The motor output torque is substantially equal during increase and decrease in torque command, achieving appropriate compensation of the hysteresis characteristics of the friction torque.

As described above, motor driving device 1 according to the present invention controls the motor current flowing to motor 2 in accordance with torque command 23. Motor driving device 1 includes friction compensator 14 configured to generate friction compensating torque command 29 for compensation of the static friction torque of motor 2, in accordance with torque command 23 and motor speed 28 of motor 2. Friction compensator 14 generates friction compensating torque command 29 in accordance with the code of the variation for the torque command immediately before torque command 23. Motor driving device 1 controls the motor current in accordance with compensated torque command 30 generated by adding friction compensating torque command 29 to torque command 23.

Motor driving device 1 achieves compensating influence of the friction torque during motor stop and obtaining the motor output torque according to torque command 23.

For example, friction compensator 14 may switch the code of friction compensating torque command 29 in accordance with the code of variation 111 of torque command 23.

Provision of friction compensator 14 in motor driving device 1 enables appropriate compensation of the friction torque with additional simple calculation of only switching code.

More specifically, friction compensating torque command 29 generated by friction compensator 14 has a positive value when variation 111 of torque command 23 has a positive value, and has a negative value when variation 111 of torque command 23 has a negative value. Friction compensating torque command 29 generated by friction compensator 14 is generated in accordance with the torque command immediately before torque command 23 when variation 111 of torque command 23 is zero.

When friction compensating torque command 29 is generated in this manner, the friction torque can be compensated appropriately through controlling the motor current in accordance with compensated torque command 30 generated by adding friction compensating torque command 29 to torque command 23.

Friction compensating torque command 29 generated by friction compensator 14 is zero when motor speed 28 is not zero.

This enables compensation of the friction torque only in a case where the friction torque needs to be compensated, in other words, while motor 2 stops.

The invention includes generating compensated torque command 30 by adding friction compensating torque command 29 to torque command 23. Compensated torque command 30 is not limited to this case in terms of its generation method. Compensated torque command 30 may alternatively be generated by subtracting, from torque command 23, friction compensating torque command 29 having code inverted from the code according to the invention. That is, motor driving device 1 may control the motor current in accordance with compensated torque command 30 generated by subtracting friction compensating torque command 29 from torque command 23.

### INDUSTRIAL APPLICABILITY

As described above, motor driving device 1 according to the present disclosure switches code of friction compensating torque command 29 in accordance with code of variation of torque command 23 to correctly compensate influence of friction torque even while motor 2 stops and obtain motor output torque according to torque command 23. Motor driving device 1 according to the present disclosure is thus useful in a processing machine or the like, which particularly needs accurate control of the motor output torque.

The present disclosure is not limitedly applicable to torque control, but improves motor operation readiness and positioning setting through appropriate compensation of the friction torque also in position control or speed control. The present disclosure is not limitedly applicable to a rotary motor, but is obviously applicable also to a linear motor with simple replacement of a rotary system unit to a linear motion system unit.

### REFERENCE MARKS IN THE DRAWINGS

- 1: motor driving device
- 2: motor
- 3: encoder
- 12: current controller
- 13: speed detector
- 14: friction compensator
- 23: torque command
- 24: U-phase current
- 25: V-phase current
- 26: W-phase current
- 27: motor position
- 28: motor speed
- 29: friction compensating torque command
- 30: compensated torque command
- 101: variation calculator
- 102: code calculator
- 103: storage
- 104: torque calculator
- 111: variation
- 112: variation code
- 113: static friction torque
- 114: static friction torque compensation value

## Claims

1. A motor driving device (1) configured to control motor current flowing to a motor (2) in accordance with a torque command (23),
the motor driving device (1) comprising:
a friction compensator (14) configured to generate a friction compensating torque command (29) for compensation of static friction torque of the motor (2), wherein
the friction compensator (14) generates the friction compensating torque command (29) in accordance with code (112) of variation (111) for a torque command immediately before the torque command (23), and
the motor driving device (1) controls the motor current in accordance with a compensated torque command (30); and
a speed detector (13) configured to receive a motor position from an encoder (3) of the motor (2) and to calculate a motor speed (28), wherein
the friction compensator (14) includes:
a variation calculator (101) configured to calculate the variation (111) of torque command in accordance with the received torque command (23);
a code calculator (102) configured to calculate a variation code (112) in accordance with the variation (111) received from the variation calculator (101), wherein the variation code (112) is 1 when the variation (111) has a positive value, and the variation code 112 )is-1 when the variation (111) has a negative value, **characterized in that** the friction compensator (14) further includes
a storage (103) configured to store a value of static friction torque (113); and
a torque calculator (104) configured to calculate the friction compensating torque command (29) in accordance with the motor speed (28) and a static friction torque compensation value (114) obtained by multiplying the variation code (112) and the static friction torque (113);
wherein the torque calculator (104) receives the motor speed (28) from the speed detector (13),
wherein the torque calculator (104) sets the friction compensating torque command (29) to the static friction torque compensation value (114) when the motor speed (28) is zero and sets the friction compensating torque command (29) to zero when the motor speed (28) is not zero; and
wherein the compensated torque command is generated by adding or subtracting the friction compensating torque command (29) to or from the torque command (23).

2. The motor driving device (1) according to claim 1, wherein
the friction compensator (14) switches code of the friction compensating torque command (29) in accordance with code of variation (112 ) of the torque command (23).

3. The motor driving device (1) according to claim 1 or 2, wherein
the friction compensating torque command (29) has a positive value when variation (111) of the torque command (23) has a positive value, has a negative value when the variation (111) of the torque command (23) has a negative value, and is generated in accordance with the torque command immediately before the torque command (23) when the variation (111) of the torque command (23) is zero.

## Patentansprüche

1. Motoransteuerungsvorrichtung (1), die so konfiguriert ist, dass sie einen zu einem Motor (2) fließenden Motorstrom gemäß einem Drehmomentbefehl (23) steuert,
wobei die Motoransteuerungsvorrichtung (1) umfasst:
einen Reibungskompensator (14), der so konfiguriert ist, dass er einen Reibungskompensations-Drehmomentbefehl (29) zum Kompensieren des Haftreibungsdrehmoments des Motors (2) erzeugt, wobei
der Reibungskompensator (14) den Reibungskompensations-Drehmomentbefehl (29) gemäß dem Code (112) der Variation (111) für einen Drehmomentbefehl unmittelbar vor dem Drehmomentbefehl (23) erzeugt, und
die Motoransteuerungsvorrichtung (1) den Motorstrom gemäß einem kompensierten Drehmomentbefehl (30) steuert; und
einen Geschwindigkeitsdetektor (13), der dazu konfiguriert ist, eine Motorposition von einem Encoder (3) des Motors (2) zu empfangen und eine Motorgeschwindigkeit (28) zu berechnen,
wobei:
der Reibungskompensator (14) umfasst:
einen Variationsrechner (101), der dazu konfiguriert ist, die Variation (111) des Drehmomentbefehls gemäß dem empfangenen Drehmomentbefehl (23) zu berechnen;
einen Coderechner (102), der dazu konfiguriert ist, einen Variationscode (112) gemäß der Variation (111) zu berechnen, die von dem Variationsrechner (101) empfangen wird, wobei der Variationscode (112) 1 ist, wenn die Variation (111) einen positiven Wert hat, und der Variationscode (112) -1 ist, wenn die Variation (111) einen negativen Wert hat, **dadurch gekennzeichnet, dass** der Reibungskompensator (14) ferner umfasst:
einen Speicher (103), der konfiguriert ist, um einen Wert des Haftreibungsdrehmoments (113) zu speichern; und
einen Drehmomentrechner (104), der dazu konfiguriert ist, den Reibungskompensations-Drehmomentbefehl (29) gemäß der Motordrehzahl (28) und einem Haftreibungsdrehmoment-Kompensationswert (114) zu berechnen, der durch Multiplizieren des Variationscodes (112) und des statischen Reibungsdrehmoments (113) erhalten wird;
wobei der Drehmomentrechner (104) die Motordrehzahl (28) von dem Drehzahldetektor (13) empfängt,
wobei der Drehmomentrechner (104) den Reibungskompensations-Drehmomentbefehl (29) auf den Haftreibungsdrehmoment-Kompensationswert (114) setzt, wenn die Motordrehzahl (28) Null ist, und den Reibungskompensations-Drehmomentbefehl (29) auf Null setzt, wenn die Motordrehzahl (28) nicht Null ist; und
wobei der kompensierte Drehmomentbefehl durch Addieren oder Subtrahieren des reibungskompensierenden Drehmomentbefehls (29) zu oder von dem Drehmomentbefehl (23) erzeugt wird.

2. Motoransteuerungsvorrichtung (1) nach Anspruch 1, wobei
der Reibungskompensator (14) den Code des reibungskompensierenden Drehmomentbefehls (29) in Übereinstimmung mit dem Variationscode (112) des Drehmomentbefehls (23) umschaltet.

3. Motoransteuerungsvorrichtung (1) nach Anspruch 1 oder 2, wobei
der reibungskompensierende Drehmomentbefehl (29) einen positiven Wert hat, wenn die Variation (111) des Drehmomentbefehls (23) einen positiven Wert hat, einen negativen Wert hat, wenn die Variation (111) des Drehmomentbefehls (23) einen negativen Wert hat, und in Übereinstimmung mit dem Drehmomentbefehl unmittelbar vor dem Drehmomentbefehl (23) erzeugt wird, wenn die Variation (111) des Drehmomentbefehls (23) Null ist.

## Revendications

1. Dispositif gouverneur de moteur (1) configuré pour commander un courant de moteur circulant vers un moteur (2) conformément à une instruction de couple (23),
le dispositif gouverneur de moteur (1) comprenant :
un compensateur de frottement (14) configuré pour générer une instruction de couple de compensation de frottement (29) pour la compensation d'un couple de frottement statique du moteur (2), dans lequel
le compensateur de frottement (14) génère l'instruction de couple de compensation de frottement (29) conformément à un code (112) d'une variation (111) pour une instruction de couple immédiatement avant l'instruction de couple (23), et
le dispositif gouverneur de moteur (1) commande le courant de moteur conformément à une instruction de couple compensée (30) ; et
un détecteur de vitesse (13) configuré pour recevoir une position de moteur à partir d'un encodeur (3) du moteur (2) et pour calculer une vitesse de moteur (28),
dans lequel
le compensateur de frottement (14) inclut :
un calculateur de variation (101) configuré pour calculer la variation (111) de l'instruction de couple conformément à l'instruction de couple reçue (23) ;
un calculateur de code (102) configuré pour calculer un code de variation (112) conformément à la variation (111) reçue à partir du calculateur de variation (101), dans lequel le code de variation (112) est 1 lorsque la variation (111) a une valeur positive, et le code de variation (112) est -1 lorsque la variation (111) a une valeur négative, **caractérisé en ce que** le compensateur de frottement (14) inclut en outre
un stockage (103) configuré pour stocker une valeur du couple de frottement statique (113) ; et
un calculateur de couple (104) configuré pour calculer l'instruction de couple de compensation de frottement (29) conformément à la vitesse de moteur (28) et une valeur de compensation de couple de frottement statique (114) obtenue en multipliant le code de variation (112) et le couple de frottement statique (113) ;
dans lequel le calculateur de couple (104) reçoit la vitesse de moteur (28) à partir du détecteur de vitesse (13),
dans lequel le calculateur de couple (104) règle l'instruction de couple de compensation de frottement (29) à la valeur de compensation de couple de frottement statique (114) lorsque la vitesse de moteur (28) est zéro et règle l'instruction de couple de compensation de frottement (29) à zéro lorsque la vitesse de moteur (28) n'est pas zéro ; et
dans lequel l'instruction de couple compensée est générée en additionnant ou soustrayant l'instruction de couple de compensation de frottement (29) à ou à partir de l'instruction de couple (23).

2. Dispositif gouverneur de moteur (1) selon la revendication 1, dans lequel
le compensateur de frottement (14) change le code de l'instruction de couple de compensation de frottement (29) conformément au code de variation (112) de l'instruction de couple (23).

3. Dispositif gouverneur de moteur (1) selon la revendication 1 ou 2, dans lequel
l'instruction de couple de compensation de frottement (29) a une valeur positive lorsque la variation (111) de l'instruction de couple (23) a une valeur positive, a une valeur négative lorsque la variation (111) de l'instruction de couple (23) a une valeur négative, et est générée conformément à l'instruction de couple immédiatement avant l'instruction de couple (23) lorsque la variation (111) de l'instruction de couple (23) est zéro.
